(19) Europäisches Patentamt
European Patent Office
Office européen des brevets

(11) **EP 1 327 797 A1**

(12) **EUROPÄISCHE PATENTANMELDUNG**

(43) Veröffentlichungstag:
**16.07.2003  Patentblatt 2003/29**

(51) Int Cl.⁷: **F16G 5/16**

(21) Anmeldenummer: **02000572.4**

(22) Anmeldetag: **10.01.2002**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(71) Anmelder: **ContiTech Antriebssysteme GmbH**
**30165 Hannover (DE)**

(72) Erfinder: **Sattler, Heiko, Dr.**
**30175 Hannover (DE)**

(74) Vertreter: **Schneider, Egon**
**Continental Aktiengesellschaft,**
**Patentabteilung,**
**Postfach 1 69**
**30001 Hannover (DE)**

(54) **Hybridkeilriemen mit verstärkten Stützelementen**

(57)    2.1 Ein Hybridkeilriemen (4) besteht aus mindestens einem Zugträger (8, ...) und zur Verstärkung daran angeordneten Stützelementen (10), die mit mindestens jeweils einem Schlitz (16a, ...) zur Aufnahme des mindestens einen Zugträgers (8, ...) versehen sind. Die Stützelemente (10) weisen jeweils ein Verstärkungsteil (12) mit in Riemenbreitenrichtung sich erstreckenden Ausläufern oder Armen (22a, 22b) auf, die durch einen Verbindungssteg (26) miteinander verbunden sind.

2.2 Um eine möglichst gleichmäßige Verteilung der auf die Stützelemente (10) wirkenden Biegebeanspruchung zu erzielen, weisen mindestens die vom Drehzentrum entfernteren Ausläufer oder Arme (22a, 22b) in ihrer Längserstreckung vom Verbindungssteg (26) bis zu ihren Enden einen sich verjüngenden Querschnitt ($h_x$) auf, der konisch oder dessen Berandung (24) konvex gekrümmt sein kann. Bei konvexer Gestaltung ist auch eine segmentierte Berandung (24a, 24b, 24c, ...) möglich.

Fig. 1a

## Beschreibung

Bei dem technischen Gegenstand der Erfindung handelt es sich um einen aus mindestens einem Zugträger und zur Versteifung daran angeordneten Stützelementen bestehenden Hybridkeilriemen gemäß dem Oberbegriff des Anspruchs 1.

## Stand der Technik

Vorbekannt sind eine Reihe verschiedener Bauformen von Hybridkeilriemen mit versteifenden Stützelementen, deren mechanische Eigenschaften maßgeblich einem Verbund aus einem Verstärkungsteil und einem Restkörper zuzuschreiben sind. Die Steifigkeit des Verstärkungsteiles wiederum beruht neben seiner Formgebung im wesentlichen auf der Steifigkeit des verwendeten Materials, das sich durch einen hohen Elastizitätsmodul im Vergleich zum Restkörper auszeichnet.

In bekannten Ausführungen von Hybridkeilriemen, die aus mindestens einem Zugträger sowie einer Vielzahl von damit in Riemenlaufrichtung formschlüssig verbundenen Stützelementen bestehen, sind die Verstärkungsteile dieser Stützelemente derart ausgeführt, dass bei gleichbleibender Ausdehnung in Riemenlaufrichtung (Dicke der Verstärkungsteile) die Querschnittsfläche von sich in Riemenbreitenrichtung erstreckenden Ausläufern oder Armen in dieser Richtung hinsichtlich Breite und Höhe konstant ist.

Weiterhin sind Ausführungen bekannt, bei denen an Verstärkungselementen die Mittenachse der Ausläufer oder Arme in Riemenbreitenrichtung mit der drehzentrumsseitigen Oberfläche der Riemenscheibe einen bestimmten Winkel einschließen oder bei denen die Ausläufer oder Arme im Verlauf ihrer Erstreckung in ungefährer Riemenbreitenrichtung abgewinkelt sind (EP 0 994 277 A1).

Darüber hinaus gibt es verschiedene Bauformen, bei denen die Verstärkungsteile in Riemenbreitenrichtung von ihren Enden her bis über die Mitte der Ausläufer oder Arme angefast sind oder bei denen die Querschnittshöhe von den Enden der Ausläufer her über einen Großteil der Erstreckung in Riemenbreitenrichtung linear zunimmt (DE 100 30 437 A1). Weiterhin sind die Verstärkungsteile im Aufnahmeschlitz für den Zugträger mit Rundungen versehen, um den Verbund zwischen Verstärkungsteil und Restkörper zu verbessern (JP 11 082 637, EP 0994 276 A1).

Bedingt durch die Flächenpressungen, die im Betrieb im Kontakt zwischen Kegelscheibe und Hybridkeilriemen wirken, und durch die Zugkräfte in Riemenlängsrichtung wird über den Zugträger auf die Oberflächen des ihn aufnehmenden Schlitzes am Stützelement einerseits und auf die Flanken des Stützelementes andererseits eine Beanspruchung durch Flächenpressungen $p$ ausgeübt, die dazu führt, dass auf den für den Verformungswiderstand hauptsächlich verantwortlichen Verstärkungsteil Kräfte wirken, die mechanische Spannungen im Verstärkungsteil hervorrufen und damit auch geringfügige Verformungen.

Je nach ausgeführter Geometrie der Verstärkungsteile in Riemenbreitenrichtung, die in aller Regel aus zwei solchen in Riemenbreitenrichtung verlaufenden Ausläufern oder Armen näher und entfernter vom Drehzentrum bestehen, kommt es zu einer ungleichmäßigen Beanspruchung der Querschnitte im Verlauf der Ausläufer oder Arme in Riemenbreitenrichtung und somit zu Spannungsmaxima in bestimmten Querschnitten, die die Lebensdauer eines Hybridkeilriemens insgesamt herabsetzten.

## Aufgabe und Lehre der Erfindung

Die mit den Merkmalen des Anspruchs 1 im wesentlichen gelöste Aufgabe der Erfindung besteht darin, den Verstärkungsteil im Verlauf in Riemenbreitenrichtung derart zu formen, dass die über den um den Verstärkungsteil herum befindlichen Restkörper eingeleiteten Beanspruchungen aus den Flächenpressungen am den Zugträger aufnehmenden Schlitz und aus den Flächenpressungen auf den Flanken des Stützelementes ohne Spannungskonzentration in den Verstärkungsteil eingeleitet werden und weiterhin eine möglichst gleichmäßige Verteilung der maximalen Spannungen in den Querschnitten des Verstärkungsteils entlang der Riemenbreitenrichtung verursachen.

Eine gleichmäßige Spannungsverteilung über die Querschnitte innerhalb des Verstärkungsteils wird vorzugsweise erreicht, indem mindestens eine Seite der Berandung eines Ausläufers oder Armes am Verstärkungsteil in mindestens drei geraden Abschnitten oder mindestens drei Abschnitten konstanter Krümmung ausgeführt wird oder alternativ eine kontinuierlich veränderliche Krümmung verwendet wird, die in ihrer Aneinanderreihung oder ihrem Verlauf für ein stetiges Ansteigen des Querschnittes vom Ende eines Ausläufers oder Armes in der Nähe der Kegelscheibe zu dessen Ausgangspunkt hin sorgen.

Im Falle gerader Abschnitte der Berandungslinie werden zwischen diesen Abschnitten Rundungen eingesetzt, deren Übergänge zu den geraden Abschnitten tangential verlaufen. Der gleiche tangentiale Übergang wird in dem Fall eingesetzt, dass Abschnitte konstanter Krümmung aneinander angrenzen. Schroffe Übergänge oder Knickstellen zwischen Querschnittsverläufen in den verschiedenen Abschnitten der Ausläufer oder Arme des Verstärkungsteiles werden auf diese Weise vermieden.

Die über den Restkörper eingeleitete Beanspruchung setzt sich in Bezug auf die Hauptstreckungsrichtung der Ausläufer oder Arme aus Normal- und Biegebeanspruchungen zusammen, die sich aus den Flächenpressungen im Schlitz für den Zugträger und den Flächenpressungen auf den Flanken der Stützelemente ergeben. Da die Beanspruchung der Arme zum Schlitzgrund hin nur bei punktförmigem Kraftangriff quer zur Hauptachse eines Ausläufers oder Armes linear ansteigt, tatsächlich aber auch die eingeleitete, über die Erstreckung des Schlitzes aufgrund der Oberflächereibung veränderliche Flächenpressung einen Beitrag leistet, ist ein verbesserter Verlauf der Querschnittshöhe über der Länge der Ausläufer oder Arme nichtlinear auszuführen. Um eine gleichmäßige Beanspruchung der Verstärkungsteile hauptsächlich durch die gegenüber den Normalspannungen dominierenden Biegespannungen zu gewährleisten und damit die dauerhafte Gestaltfestigkeit zu erhöhen, nimmt gemäß einer konkreten Ausgestaltung der Erfindung die Querschnittsfläche ausgehend vom Ursprung der Ausläufer oder Arme von einer Höhe $H_0$ zu den Enden hin und damit zur Oberfläche der Kegelscheibe mit der Koordinate $x$ in Riemenbreitenrichtung über die Länge $L$ der Arme gemäß folgender Beziehung ab:

$$h(x) = H_0 \cdot (1 - k^2/L \cdot x) \text{ mit } 0{,}3 \leq |k| \leq 0{,}7$$

Da die vom Drehzentrum entfernteren Ausläufer oder Arme aufgrund der Form der Kegelscheiben und des Keilspaltes eine große Erstreckung aufweisen, somit größeren Biegebeanspruchungen ausgesetzt sind und weiterhin die dem Drehzentrum näherliegenden Ausläufer oder Arme vom Zugträger im Schlitz unterstützt werden, ist die erfindungsgemäße Ausführung bei diesen Ausläufern oder Armen von größerem Nutzen und wird mindestens dort ausgeführt.

## Zeichnungen

In den Zeichnungen werden ein erfindungsgemäßer Hybridkeilriemen und verschiedene Stützelemente dargestellt und anschließend beschrieben. Es zeigt:

> Fig. 1a ausschnittsweise eine Hybridkeilriemenanordnung, und zwar mit Stützelement in Riemenlaufrichtung betrachtet, mit im Querschnitt angedeutetem Zugträger und mit den Flanken einer Riemenscheibe;
> Fig. 1b einen Schnitt durch ein Stützelement quer zur Riemenlaufrichtung betrachtet.
> Fig. 2 bis Fig. 6 zeigen verschiedene Ausführungsformen von Stützelementen jeweils mit Verstärkungsteil, wobei die Verstärkungsteile jeweils unterschiedliche Konturen aufweisen, und zwar:

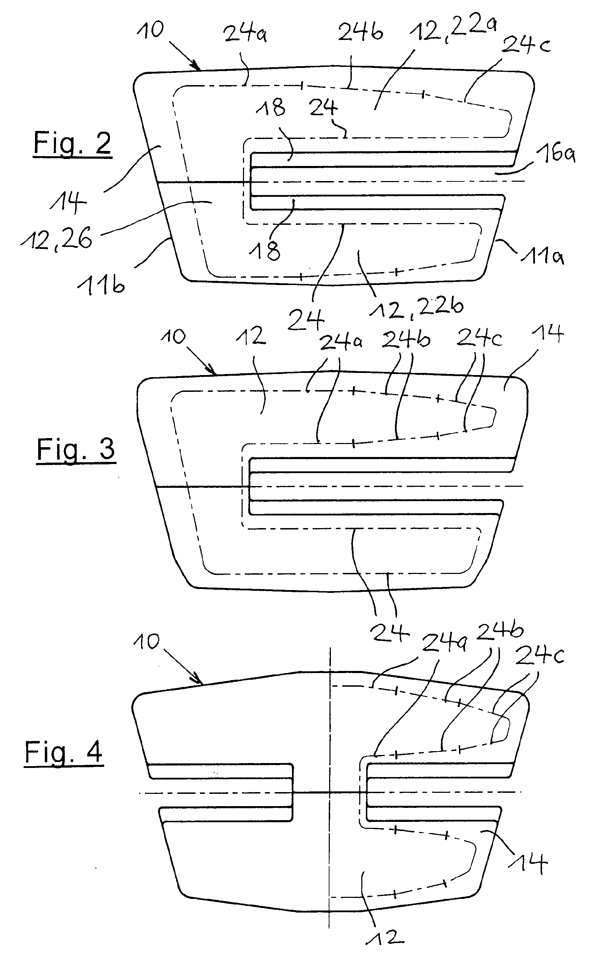

> Fig. 2 radial äußerer Flügel, Kontur außen: segmentiert; Kontur Schlitz: geradlinig; radial innerer Flügel, Kontur außen: segmentiert; Kontur Schlitz: geradlinig; Ausführung der Kontur: 3 Geraden;
> Fig. 3 radial äußerer Flügel, Kontur außen: segmentiert; Kontur Schlitz: segmentiert; radial innerer Flügel, Kontur außen: geradlinig; Kontur Schlitz: geradlinig; Ausführung der Kontur: 3 Geraden;
> Fig. 4 radial äußerer Flügel, Kontur außen: segmentiert; Kontur Schlitz: segmentiert; radial innerer Flügel, Kontur außen: segmentiert; Kontur Schlitz: segmentiert; Ausführung der Kontur: 3 Geraden;

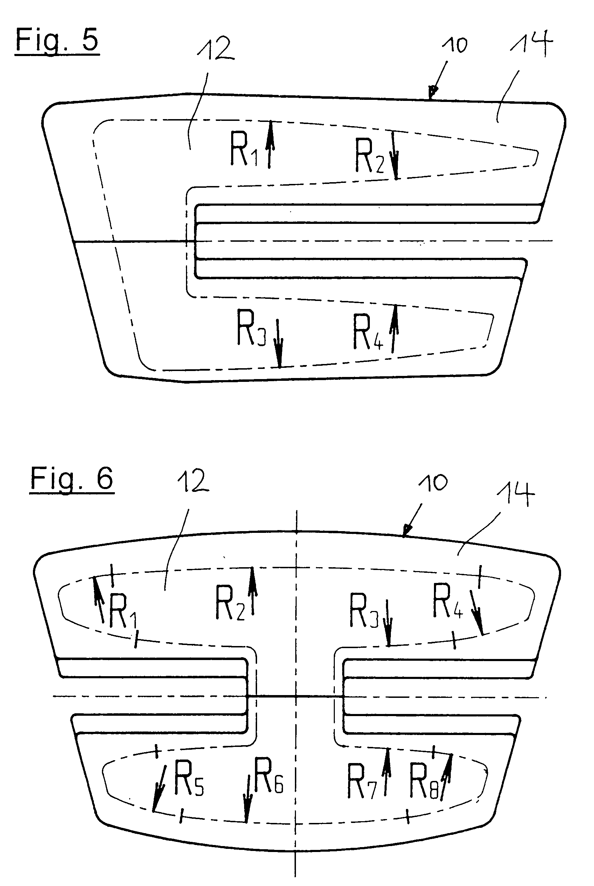

> Fig. 5 radial äußerer Flügel, Kontur außen: Radius; Kontur Schlitz: Radius; radial innerer Flügel, Kontur außen: Radius; Kontur Schlitz: Radius; Ausführung der Kontur: 1 Radius;
> Fig. 6 radial äußerer Flügel, Kontur außen: segmentiert; Kontur Schlitz: segmentiert; radial innerer Flügel, Kontur außen: segmentiert; Kontur Schlitz: segmentiert; Ausführung der Kontur: 2 Radien.

## Beschreibung der Erfindung

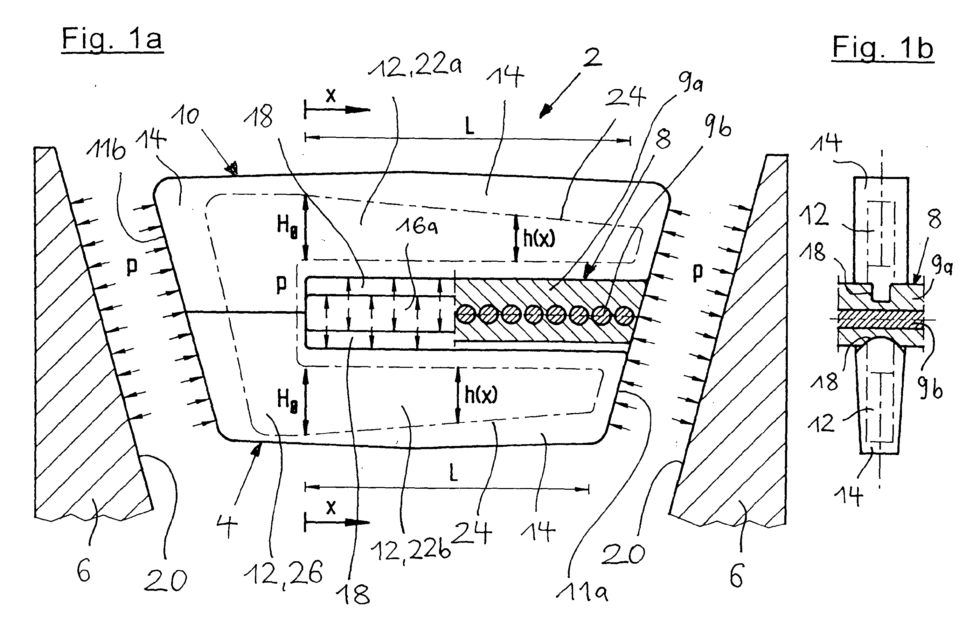

Die in Fig. 1a/b dargestellte Ausführungsform eines erfindungsgemäßen Stützelementes (Stützblokkes) 10 weist in etwa einen trapezförmigen Querschnitt auf. Dabei sind zwei sich gegenüberstehende Seitenflächen 11a, 11b in der Weise zueinander geneigt, dass sie zu den Flanken 20 einer Riemenscheibe 6 korrespondieren.
In einer dieser Seitenflächen 11a, 11b ist ein Schlitz 16a (Begrenzungsflächen 18 des Schlitzes 16a) eingebracht. Dieser Schlitz 16a verläuft von der einen Seitenfläche 11a in Richtung auf die gegenüberliegende Seitenfläche 11b.

Das in Fig. 1a in Frontansicht dargestellte Stützelement 10 zeigt die während des Betriebs wirkenden Flächenpressungen $p$ sowohl im den Lastträger 8 aufnehmenden Schlitz 16a als auch auf den Seitenflächen 11a, 11b im Kontakt mit den Flanken 20 der Riemenscheibe(n) 6.
Das Stützelement 10 weist intern ein Verstärkungsteil 12 auf.
Die erfindungsgemäße Besonderheit besteht in der speziellen Ausbildung des Verstärkungsteils 12 mit von den Enden eines oberen 22a und eines unteren Ausläufers bzw. Armes 22b in Koordinatenrichtung in Riemenbreite bis zum Schlitzgrund zunehmenden Querschnitt aufgrund steigender Querschnittshöhe h(x).

An ihrer Basis mit der Querschnittshöhe $H_0$ sind der obere 22a und der untere Ausläufer (Arm) 22b durch einen Verbindungssteg 26 miteinander verbunden, so dass insgesamt ein einstückiges Stützelement gegeben ist.
Während der in den Schlitze 16 eingeführte Zugträger 8 im wesentlichen aus Elastomerkörper 9a, Zugsträngen 9b und evtl. Deckgewebe besteht, sind die Stützelemente 10 aus einem Material höheren Verformungswiderstandes als der Zugträger 8 hergestellt.

Alle in Fig. 2 bis Fig. 6 gezeigten verschiedenen alternativen Ausführungsformen von erfindungsgemäßen Stützelementen 10 weisen in etwa einen trapezförmigen Querschnitt auf. Bei allen sind zwei sich gegenüberstehende Seitenflächen 11a, 11b in der Weise zueinander geneigt, dass sie zu den Flanken 20 einer Riemenscheibe 6 korrespondieren.

Bei den Ausführungsformen gemäß Fig. 3 und Fig. 5 ist - vergleichbar Fig. 1 - jeweils ein Schlitz 16a in eine 11a der sich gegenüberstehenden Seitenflächen 11a, 11b eingebracht.

Bei den Ausführungsformen gemäß Fig. 4 und Fig. 6 ist in beide der sich gegenüberstehenden Seitenflächen 11a, 11b jeweils ein Schlitz 16a, 16b eingebracht. Diese beiden Schlitze 16a, 16b verlaufen von den Seitenflächen 11a, 11b in Richtung auf den mittleren Bereich des Stützelementes 10. Die Flanken (Begrenzungsflächen) dieser Schlitze 16a, 16b sind mit der Ziffer 18 gekennzeichnet.

Die verschiedenen, in Fig. 2 bis Fig. 6 dargestellten Stützelemente zeigen jeweils ein Verstärkungsteil, dessen Ausläufer (Arme) 22a, 22b jeweils eine sich verjüngende Querschnittshöhe h(x) aufweisen.

Die sich verjüngende Querschnittshöhe h(x) kann entweder - wie in Fig. 1 dargestellt - durch eine konische Gestalt mit geradliniger Berandung realisiert werden oder durch eine mehr oder weniger konvexe Ausbildung der Ausläufer 22a, 22b. Die konvexe Ausbildung kann wiederum durch eine durchgehende Krümmung oder durch eine geradlinige oder gekrümmte Segmentierung der Berandung(en) der Ausläufer realisiert werden.

Das Material der Stützelemente zeichnet sich in jedem Fall durch einen im Vergleich zum Restkörper hohen Elastizitätsmodul aus.

**Bezugszeichenliste**

| | |
|---|---|
| 2 | Keilriemenanordnung |
| 4 | Hybridkeilriemen |
| 6 | Riemenscheibe, Kegelscheibe |
| 8, 8a, 8b | Zugträger (Lastträger) |
| 9a | Elastomerkörper |
| 9b | Zugstränge |
| 10 | Stützelement (Stützblock) |
| 11a, 11b | Seitenflächen |
| 12 | Verstärkungsteil |
| 14 | Restkörper |
| 16a, 16b | Schlitz im Stützelement (10) |
| 18 | Schlitz-Flanke(n), Begrenzungsfläche(n) des Schlitzes (16a, 16b) |
| 20 | Riemenscheibenflanke(n), Flanke(n) einer Riemenscheibe |
| 22a, 22b | Ausläufer bzw. Arme des Verstärkungsteils (12) |
| $H_0$, h(x) | Höhe der Arme (22a, 22b) |
| L | Länge der Arme (22a, 22b) |
| x | (Längen-)Koordinate |
| 24 | Berandung des Verstärkungsteils (12), Kontur |
| 24a, 24b, 24c | Abschnitte der Berandung (24) |
| 26 | Verbindungssteg |

**Patentansprüche**

1. Aus mindestens einem Zugträger (8, ...) und zur Versteifung daran angeordneten Stützelementen (10) bestehender Hybridkeilriemen (4),

   - wobei die Stützelemente (10) mit mindestens jeweils einem Schlitz (16a, ...) zur Aufnahme des mindestens einen Zugträgers (8, ...) versehen sind, und jeweils ein Verstärkungteil (12) - mit im Vergleich zum Restkörper (14) größerem E-Modul - aufweisen, und
   - wobei wiederum das jeweilige Verstärkungsteil (12) in Riemenbreitenrichtung Ausläufer oder Arme (22a, 22b) aufweist, die durch einen Verbindungssteg (26) miteinander verbunden sind,

   **dadurch gekennzeichnet,**
   **dass** mindestens die vom Drehzentrum entfernteren Ausläufer oder Arme (22a, 22b) in ihrer Längserstreckung vom Verbindungssteg (26) bis zu ihren Enden jeweils einen sich verjüngenden Querschnitt aufweisen.

2. Hybridkeilriemen nach Anspruch 1,
   **dadurch gekennzeichnet,**
   **dass** der jeweils sich verjüngende Querschnitt durch eine konische Gestalt (Querschnitts-Höhe $h_x$) realisiert ist.

3. Hybridkeilriemen nach Anspruch 1 oder 2,
   **dadurch gekennzeichnet,**

   - **dass** mindestens eine Seite der Berandung eines Ausläufers oder Armes (22a, 22b) des Verstärkungsteils (12) vom Ursprung (Verbindungssteg 26) her in mindestens drei sich verjüngende Abschnitte (24a, 24b, 24c, ...) ausgeführt ist, wobei die Abschnitte (24a, 24b, 24c, ...) jeweils geradlinig ausgebildet oder mit jeweils konstanter Krümmung ausgeführt sind, oder
   - **dass** bei der Längskontur der Berandung (24) der Ausläufer oder Arme (22a, 22b) eine sich kontinuierlich verändernde Krümmung verwendet wird, die in ihrem Verlauf über die Länge (L) der Ausläufer oder Arme (22a, 22b) für ein stetiges Ansteigen des Querschnittes ($h_x$) vom Ende eines Ausläufers oder Armes (22a, 22b) in Kegelscheibennähe bis zu dessen Ausgangspunkt am Verbindungssteg (26) hin sorgen.

**4.**    Hybridkeilriemen nach Anspruch 3,
**dadurch gekennzeichnet,**

-   **dass** die Konturen (24) des Verstärkungsteils (12) an dem mindestens einen Schlitz (16a, ...) jeweils geradlinig und dass die Konturen außen jeweils segmentiert (Abschnitte der Berandung, 24a, ...) oder mit Radius konvex nach außen gewölbt sind, oder
-   **dass** sowohl die Konturen (24) des Verstärkungsteils (12) an dem mindestens einen Schlitz (16a,...) als auch die Konturen (24) außen jeweils segmentiert oder mit Radius konvex gewölbt sind.

**5.**    Hybridkeilriemen nach einem der Ansprüche 1 bis 4,
**dadurch gekennzeichnet,**
**dass** im Falle gerader oder gekrümmter Abschnitte (24a,...) der Berandungslinie (24) zwischen den Abschnitten (24a,...) Rundungen gebildet werden, deren Übergänge zu den geraden Abschnitten (24a, ...) tangential verlaufen.

**6.**    Hybridkeilriemen nach einem der Ansprüche 1 bis 5,
**dadurch gekennzeichnet,**
**dass** die Querschnittsfläche des Verstärkungsteils (12) vom Ursprung der Ausläufer oder Arme (22a, 22b) und ihrer Höhe ($H_0$) zu den Enden in der Nähe der Oberflächen der Riemenscheiben (6) mit der Koordinate ($x$) über die Länge ($L$) der Ausläufer oder Arme (22a, 22b) in Riemenbreitenrichtung gemäß folgender Beziehung abnimmt:

$$h(x) = H_0 \cdot (1 - k^2/L \cdot x) \text{ mit } 0{,}3 \leq |k| \leq 0{,}7.$$

Fig. 1b

Fig. 1a

Fig. 2

Fig. 3

Fig. 4

7

**Fig. 5**

**Fig. 6**

**Europäisches Patentamt**

# EUROPÄISCHER RECHERCHENBERICHT

Nummer der Anmeldung

EP 02 00 0572

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | PATENT ABSTRACTS OF JAPAN vol. 1999, no. 12, 29. Oktober 1999 (1999-10-29) & JP 11 190400 A (MITSUBOSHI BELTING LTD), 13. Juli 1999 (1999-07-13) * Zusammenfassung * --- | 1,2 | F16G5/16 |
| X | US 2001/041636 A1 (BEAUPIED JOSEPH A ET AL) 15. November 2001 (2001-11-15) * Seite 4, linke Spalte, Zeile 19 - Zeile 21; Abbildungen 1,2 * --- | 1 | |
| X | US 4 655 732 A (TAKASHIMA TAKASHI) 7. April 1987 (1987-04-07) * Spalte 4, Zeile 14 - Zeile 39; Abbildungen 1-3,26 * --- | 1 | |
| A,D | EP 0 994 277 A (BANDO CHEMICAL IND) 19. April 2000 (2000-04-19) --- | | |
| A,D | DE 100 30 437 A (BANDO CHEMICAL IND) 12. April 2001 (2001-04-12) --- | | RECHERCHIERTE SACHGEBIETE (Int.Cl.7) F16G |
| A,D | PATENT ABSTRACTS OF JAPAN vol. 1999, no. 08, 30. Juni 1999 (1999-06-30) & JP 11 082637 A (BANDO CHEM IND LTD), 26. März 1999 (1999-03-26) * Zusammenfassung * --- | | |
| A,D | EP 0 994 276 A (AICHI MACHINE IND ;BANDO CHEMICAL IND (JP)) 19. April 2000 (2000-04-19) ----- | | |

Der vorliegende Recherchenbericht wurde für alle Patentansprüche erstellt

| Recherchenort | Abschlußdatum der Recherche | Prüfer |
|---|---|---|
| DEN HAAG | 30. Mai 2002 | Baron, C |

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 02 00 0572

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

30-05-2002

| Im Recherchenbericht angeführtes Patentdokument | Datum der Veröffentlichung | Mitglied(er) der Patentfamilie | Datum der Veröffentlichung |
|---|---|---|---|
| JP 11190400 A | 13-07-1999 | KEINE | |
| US 2001041636 A1 | 15-11-2001 | AU 5983401 A<br>WO 0186169 A1 | 20-11-2001<br>15-11-2001 |
| US 4655732 A | 07-04-1987 | JP 1441895 C<br>JP 60049151 A<br>JP 62007418 B<br>CA 1211301 A1<br>DE 3466042 D1<br>EP 0135710 A1 | 30-05-1988<br>18-03-1985<br>17-02-1987<br>16-09-1986<br>15-10-1987<br>03-04-1985 |
| EP 0994277 A | 19-04-2000 | JP 2992022 B2<br>JP 2000120796 A<br>EP 0994277 A1<br>US 6293886 B1 | 20-12-1999<br>25-04-2000<br>19-04-2000<br>25-09-2001 |
| DE 10030437 A | 12-04-2001 | JP 2001003994 A<br>DE 10030437 A1<br>FR 2795149 A1 | 09-01-2001<br>12-04-2001<br>22-12-2000 |
| JP 11082637 A | 26-03-1999 | KEINE | |
| EP 0994276 A | 19-04-2000 | JP 3044212 B2<br>JP 2000120798 A<br>EP 0994276 A1<br>US 6283882 B1 | 22-05-2000<br>25-04-2000<br>19-04-2000<br>04-09-2001 |

EPO FORM P0461

Für nähere Einzelheiten zu diesem Anhang : siehe Amtsblatt des Europäischen Patentamts, Nr.12/82